# EUROPEAN PATENT APPLICATION

(11) **EP 1 145 996 A1**
(43) Date of publication of application: **17.10.2001**
(21) Application number: 00500068.2
(22) Date of filing: 12.04.2000
(51) Int. Cl.: B65G 43/02, G01M 3/26, B61B 10/02, G01B 21/06

(54) **Link deterioration detector**

(71) Applicant: Proyectos y Tecnologia Europea, S.A., 08820 El Prat de Llobregat (ES)
(72) Inventor: Cuadrado Garcia, Jesus, 08820 El Prat de Llobregat (ES)
(74) Representative: Marques Alos, Fernando

(57) **Abstract**

The "LINK DETERIORATION DETECTOR", as used in aerial transport chains, the characteristics of which are a symmetrical pneumatic mechanism to measure possible fissures in links (4) while in operation, and a laser beam mechanism to measure lengthening, as a result of wear and tear of the chain links (4), controlled by a central computer. Both the pneumatic and laser mechanisms are fastened to the rail or support frame (1) that sustains the aerial traction chain. The pneumatic mechanism consists of two symmetrical, opposite parts located at both sides of the domes of the chain link (4). Its detection operation consists in the introduction of compressed air into a bearer (8), with which each symmetrical part of the pneumatic mechanism is fitted, that has previously coupled with the dome of the link (4), creating a sealed chamber. If the dome of the link (4) has a fissure, the air in the chamber expands causing a loss of pressure that is detected by a precision pressure gauge (11). This will send a signal to the central computer indicating that a link (4) with a fissure has been detected.

## Description

The object of this invention, as expressed in this descriptive report, consists of a "**LINK DETERIORATION DETECTOR"** as used in aerial transport chains.

Aerial transport chains achieve a maximum return on work in factories optimising its space and giving access to the lower areas of the manufactured product.

The chain is made up of interior and exterior links joined by pins. In the area of contact between these, wearing away may occur producing a lengthening of the chain over and above normal lengthening produced by the tension to which the links are subject.

During normal operation these chains present high tension in their links that may produce problems of excess tension. Thus, with the passage of time they end up deteriorating and eventually manifest pores and fissures and even cause breakage.

Because of this, a new link deterioration detector has been developed to allow for the detection of fissures or wear and tear in the chain links, without it being necessary to stop the chain nor alter its operation.

In the event of wear in the chain links, this will be detected by the increase in distance between the consecutive interior links, disregarding lengthening produced by chain tension.

In the case of deterioration due to fissure, the chain tends to separate the fissured surfaces when operating. These fissures are discovered by means of the formation by the detector of a sealed chamber with controlled pressure.

With the new detector we increase the aerial chain plant safety since it registers which links should be changed at the suitable moment in such a way that production is not affected.

The new link deterioration detector comprises a symmetrical pneumatic mechanism to measure possible link fissures while in operation and a mechanism with two laser beams to measure lengthening caused by chain link wear. It is controlled by a central computer.

Both the pneumatic and laser devices are fixed to the rail or support frame that sustains the aerial traction chain. The laser mechanism is arranged first and then the pneumatic mechanism, according to operating direction of the chain.

The pneumatic mechanism is on a mobile frame, moved by a guiding unit made up of a linear guide and two rollers with eccentric axis. The mechanism is composed of two opposite symmetrical parts located on both sides of the domes of the chain link to detect possible fissures in it, since these areas are most prone to cracking as a result of the pressure to which they are subject.

This mobile frame has an internal height regulator.

The laser mechanism has a gauge to measure link wear, made up of two laser units that measure the distance between two consecutive links while the chain is running. If the distance between the two consecutive links is greater than the nominal distance these measurements are registered in the central computer.

Each symmetrical part of the pneumatic mechanism is composed of a pneumatic or sealing cylinder with a self-centring sealing bearer and a frontal drive cog.

The sealing bearer is connected to an air accumulator of a specific air capacity that is fed by the general network through a pneumatic circuit with a distributor. This accumulator is connected to a pressure gauge that accurately controls any pressure loss that may occur.

The pneumatic mechanism has a set of micro-valves that controls cylinder movement; a discharge micro-valve, a pressure regulator, a valve to activate the accompanying cylinder and a retraction time delay valve.

Likewise, it has a third linear accompanying pneumatic cylinder that allows for the retraction movement of the sealing cylinders since it is fastened solidly to the fixed frame of the aerial transport chain.

The operation of each symmetrical and opposite part of the mechanism consists in introducing compressed air into the bearer, which previously couples up with the dome of the link creating a sealed chamber. In this way, if the dome of the link is fissured, the air in the chamber will escape causing a pressure loss that will be detected by the precision pressure gauge. This will send a signal to the central computer indicating the detection of a link with a fissure, differentiating whether this fissure is on the right or left side of the link and registering the link with reference to an initial link of reference.

Detection of links with fissures is done with the chain in operation in such a way that the bearer must approach the chain, accompany it for a specific time, draw away from it and again return to its position of origin.

The bearer performs these movements because of the action of first, the sealing cylinders and also, the accompanying cylinder.

The different positions that the bearer assumes form a normal operating cycle repeated for each of the interior links of the aerial transport chain. These are defined as position of origin, stand-by, closure of sealing joint filling- start-detection, end of detection- start-retraction and start-return.

In position of origin the accompanying cylinder is located at the rear end with respect to the progression of the chain and is discharging; i.e. with the cylinder micro-valve activator open.

In this position the sealing cylinders are to be found retracted and the bearer is separated from the chain at the rear end of the system.

The accumulator is full of air at maximum pressure which is confirmed by the pressure gauge.

In stand-by position the accompanying cylinder is located at the rear end with respect to the progression of the chain and it is discharging. The sealing cylinders are in an expanded state at minimum pressure resulting from the action of a pressure regulator, located in a pneumatic micro-valve-derived circuit which is mechanically operated by pulley. At this moment the bearer is near the chain, but not touching it, at the rear end of the system and the accumulator is full of air at maximum pressure.

In sealing closure position there must be maximum pressure. The bearer commences to come into contact with the chain, slightly displaced from the stand-by position. In this position the pneumatic pressure regulation micro-valve changes the route of pressure derivation causing the sealing cylinders to begin, to expand to maximum pressure. Likewise, the accompanying cylinder is next to the position of origin and is discharging. Finally, the accumulator is full of air at maximum pressure.

In sealing joint filling and start-detection positions, the accompanying cylinder is discharging, slightly displaced from closure position. The sealing cylinders are expanding at maximum pressure.

At this moment the bearer is in contact with the chain and the accumulator begins to release air into the bearer chamber by means of a mechanically pulley-operated discharge micro-valve. The pressure gauge begins to check that no important pressure loss in the accumulator is present.

In the end-of-detection and start-retraction position the accompanying cylinder has covered all its path and is discharging. In this position the time delay order for the retraction of sealing cylinders is sent to the central computer and the bearer begins moving away from the chain.

In start-return position the sealing cylinders finalise retraction and the accompanying cylinder begins to return to the position of origin at maximum pressure. At this moment the bearer is separated from the chain and is at the end of its trajectory. The accumulator is discharged and begins to be filled with air from the network.

The cycle begins in position of origin and moves on to stand-by position when the following conditions are met:

The accompanying cylinder is at the rear end with respect to the progression of the chain.

The sealing cylinders are in a state of retraction.

The accumulator is full of air at maximum pressure.

The laser beams indicate the moment in which the position of the interior links is suitable for sealing cylinder expansion preventing the drive cog from running into the chain.

To move from position of origin to stand-by position, the sealing cylinders expand, introducing air at minimum pressure into their chambers. Minimum pressure is achieved through a pressure regulator located in a pneumatic micro-valve-derived circuit which is mechanically operated by pulley.

The sealing cylinders expand until a roller located on the side of the bearer runs into the input cams to the system. At this moment the stand-by position is reached where an interior link of the chain approaches the drive cog which is positioned at one side of the bearer, beginning to drag the system as soon as it is driven by the chain.

When the system progresses accompanying the chain, it releases the input cam roller and the bearer begins to come into contact with the chain.

The position of maximum pressure is then attained, slightly displaced from the stand-by position. In this position the sealing cylinders begin to expand to maximum pressure and the bearer creates a sealed chamber with the dome of the link.

The system continues accompanying the chain and, in a position slightly displaced from the stand-by position, the accumulator begins to release air into the bearer as a result of the action of a mechanically pulley-operated micro-valve.

The system continues its progress and the pressure gauge accurately regulates any pressure loss that there may be within the bearer chamber. Any such loss that exists is because the link has a fissured dome. It sends a signal to the central computer that identifies it, with respect to a link taken as a reference point, as a deteriorated link.

The detector differentiates whether the fissure has occurred on the right of left side of the link according to the operating direction of the chain.

When the system arrives at the end of detection and the start-retraction position, the pressure gauge stops regulating possible pressure losses and sends a time delay order by means of a sealing cylinder retraction micro-valve.

At this moment the bearer is separated from the dome of the link and the accumulator air escapes, expelling the dirt that may have been left by the link in the bearer chamber.

As soon as the sealing cylinders are totally retracted, in the start-return position, detected by the end of the sealing cylinder path, the accompanying cylinder will move the system at maximum pressure to the position of origin. At this moment a new cycle will begin to check that the following interior chain link is not deteriorated.

The assembly chain performs successive cycles moving in front of. the detector each time in such a way that the computer determines statistically whether a link is deteriorated or whether there has been an error in detector reading.

For ease of deteriorated link localisation, there is a computer unit next to the equipment that enables the operator to check link deterioration by sight in order to determine its substitution. Likewise, this control equipment has the complementary link control software so as to inform, by using a printer or by connection to the central control system, of breakage detected in those links.

The new link deterioration detector can come with a traditional mechanism to label the defective link when this is detected by the system. This labelling may be through paint or the sticking of an adhesive in order to ease localisation of the deteriorated link.

In case of breakdown during the normal work cycle, should the two sealing cylinders be without pressure and be progressing as a result of the action of the accompanying cylinder or, in absence of this, because of chain drive, the detector has two safety output cams which bring about the mechanical retraction of the sealing cylinders as they are advancing. In this way the drive cog is separated from the chain preventing the detector from continuing its progression and from breaking.

### DRAWING DESCRIPTION

With the aim of illustrating what has been explained up to now, a drawing sheet accompanies this descriptive report, making up an integral part of it. In it is a simple and diagrammatic representation of an operation which is only illustrative and does not cover all the invention's practical possibilities.

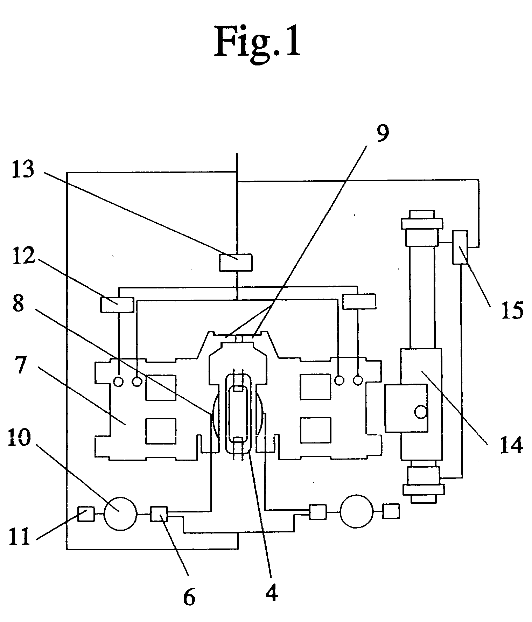

In these drawings figure 1 corresponds to a diagrammatic view of the pneumatic mechanism of the link deterioration detector.

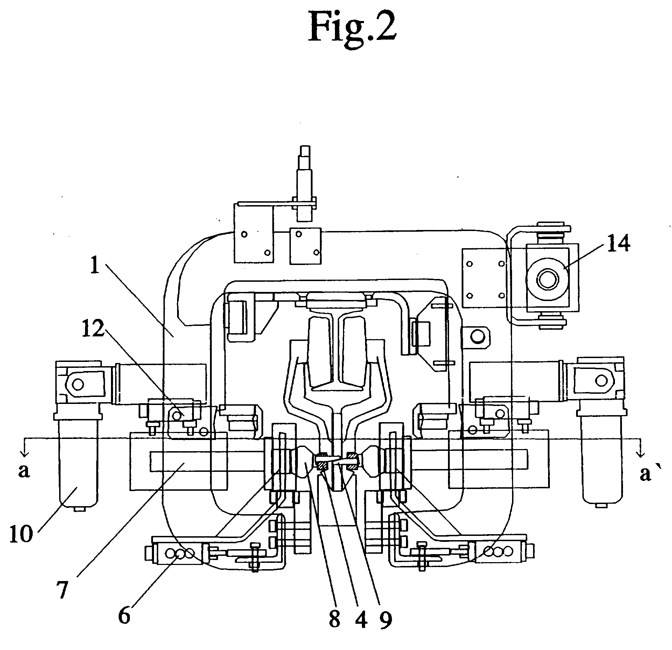

Figure 2 corresponds to a front view of the link deterioration detector mechanism.

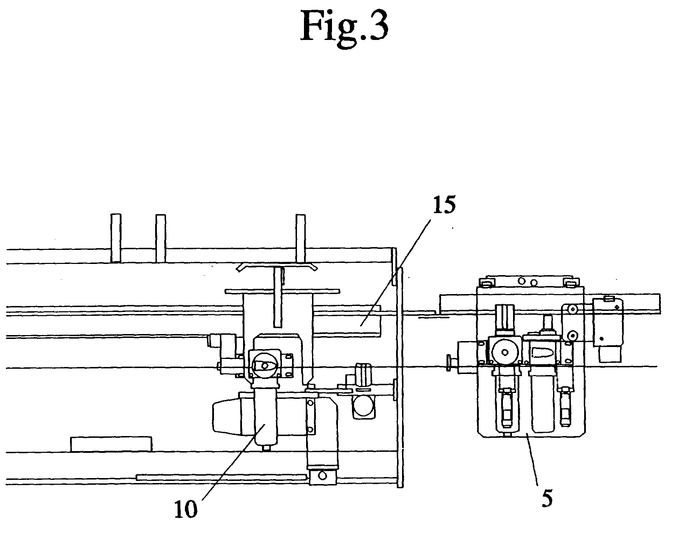

Figure 3 corresponds to a view of the profile of the new detector.

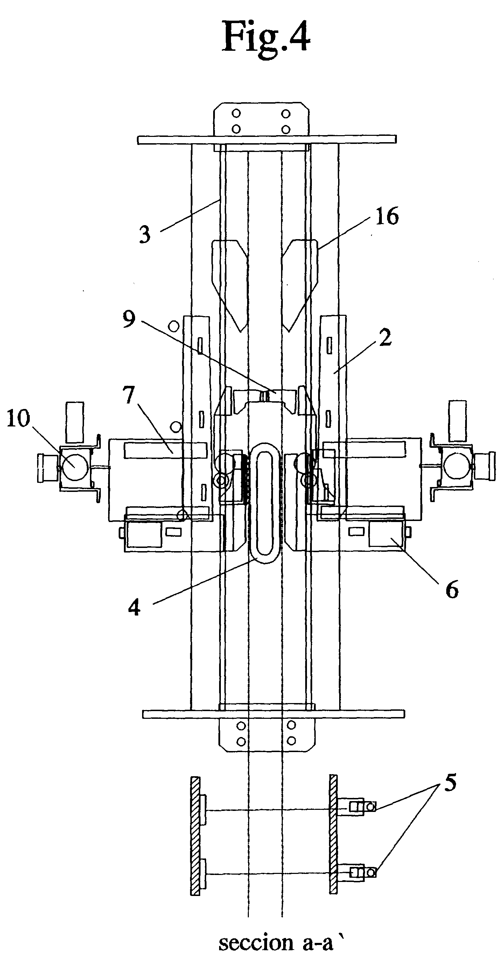

Figure 4 corresponds to a cross-section of figure 2.

### PRACTICAL CASE DESCRIPTION

The new link deterioration detector comprises a symmetrical pneumatic mechanism to measure possible link fissure while in operation, and two laser beams to measure lengthening caused by wearing away of the chain links. This is controlled by a central computer.

Both the pneumatic and laser mechanisms are fastened to the rail and support frame (1) that sustains the aerial traction chain. The laser mechanism is arranged first and then the pneumatic mechanism according to the operating direction of the chain.

The pneumatic mechanism is on a mobile frame (2), moved by a guiding unit (3) made up of a linear guide and two rollers with eccentric axis. The mechanism is composed of two opposite symmetrical parts located at on both sides of the domes of the chain link (4) to detect possible fissures in it.

This mobile frame (2) has an internal height regulator.

The laser mechanism (5) has a gauge to measure link wear, made up of two laser units that measure the distance between two consecutive links (4) while the chain is running. If the distance between the two consecutive links is greater than the nominal distance, there exists wear and these measurements are registered in the central computer (not illustrated).

Each symmetrical part of the pneumatic mechanism is composed of a pneumatic or sealing cylinder (7) with a self-centring sealing bearer (8) and a frontal drive cog (9).

The sealing bearer (8) is connected to an air accumulator of a specific air capacity (10) that is fed by the general network through a pneumatic circuit with distributors. This accumulator (10) is connected to a pressure gauge (11) that accurately controls any pressure loss that may occur.

The pneumatic mechanism has a set of micro-valves that controls cylinder movement; a discharge micro-valve (6), a pressure regulator (12) and a retraction time delay (13).

Likewise, it has a third linear accompanying pneumatic cylinder (14) that allows for the retraction movement of the sealing cylinders since it is fastened solidly to the fixed frame of the aerial transport chain and has an activating micro-valve of the accompanying cylinder (15).

The detector has two input cams that are not illustrated and two safety output cams (17) from the pneumatic mechanism.

The new link deterioration detector can come with a mechanism, not illustrated, to label the defective link when it is detected by the system. This labelling may be by blast painting or sticking an adhesive in order to localise the deteriorated link.

Having established the expressed concept, the claim sheet is drawn up below, synthesising the new developments to be claimed:

## Claims

1. **"LINK DETERIORATION DETECTOR",** of the type used in aerial transport chains, the characteristics of which are basically a symmetrical pneumatic mechanism to measure possible link fissure while in operation and a mechanism with two laser beams to measure chain link lengthening as a result of wear, controlled by a central computer. Both the pneumatic and laser mechanisms are fastened to the rail or support frame that sustains the aerial traction chain. The laser mechanism is arranged first and then the pneumatic mechanism, depending on the chain's operating direction.

2. **" LINK DETERIORATION DETECTOR",** according to previous claims, the characteristics of which are a pneumatic mechanism on mobile frame which has an internal height regulator and is moved by a guiding unit. The mechanism is composed of two opposite symmetrical parts located at both sides of the ends of the chain link.

3. **" LINK DETERIORATION DETECTOR",** according to previous claims, the characteristics of which are the laser mechanism with link wear gauge comprising two laser units that measure the distance between two consecutive links while the chain is operating. These measurements are registered in the central computer. Wear is present when the existing distance between the two consecutive links is greater than the nominal distance.

4. **" LINK DETERIORATION DETECTOR",** according to previous claims, the characteristics of which are that each symmetrical part of the pneumatic mechanism comprises a pneumatic or sealing cylinder with a self-centring sealing bearer and a frontal drive cog. The sealing bearer is connected to an air accumulator of specific capacity which is fed by the general network through a pneumatic circuit with a distributor. This accumulator is connected to a pressure gauge that accurately controls any pressure loss that may occur.

5. " **LINK DETERIORATION DETECTOR"**, according to previous claims, the characteristics of which are a pneumatic mechanism with a set of micro-valves that control the movement of the cylinders, a discharge micro-valve, a pressure regulator, a valve to activate the accompanying cylinder and a retraction time delay valve.

6. **" LINK DETERIORATION DETECTOR",** according to previous claims, the characteristics of which are a third linear pneumatic accompanying cylinder that allows for sealing cylinder retraction movement since it is fastened solidly to the fixed frame of the aerial transport chain.

7. **" LINK DETERIORATION DETECTOR",** according to previous claims, the characteristics of which are that the operation of each symmetric and opposite part of the pneumatic mechanism consists in the introduction of compressed air into the bearer which previously is attached to the dome of the links to create a sealed chamber. If the dome of the link has a fissure, the air in the chamber expands causing a loss in pressure. This is detected by the precision pressure gauge which will send a signal to the central computer indicating that a fissured link has been detected, differentiating whether this fissure is on the right or left side of the link and registering the link with respect to an initial reference link

8. **" LINK DETERIORATION DETECTOR",** according to previous claims, the characteristics of which are that the different positions in which the bearer is located form a normal operation cycle, repeated for each of the interior links of the aerial transport chain. These are defined as position of origin, stand-by, closure of sealing joint filling- start-detection, end of detection-start-retraction and start-return.

9. **" LINK DETERIORATION DETECTOR",** according to claim 8, the characteristics of which are that in position of origin the accompanying cylinder is to be found at the rear end with respect to the progression of the chain and it is discharging, i.e. with the cylinder activator micro-valve open. In this position the sealing cylinders are in a retracted position and the bearer is separated from the chain and at the rear end of the system. The accumulator is full of air at maximum pressure which is confirmed by the pressure gauge.

10. **"LINK DETERIORATION DETECTOR",** according to claim 8, the characteristics of which are that in stand-by position, the accompanying cylinder is to be found at the rear end with respect to the progression of the chain and it is discharging. The sealing cylinders are expanded at minimum pressure as a result of the action of a pressure regulator located in pneumatic micro-valve derived circuit which is mechanically-operated by pulley. At this moment the bearer is near the chain, without touching it, and at the rear end of the system. The accumulator is full of air at maximum pressure.

11. **"LINK DETERIORATION DETECTOR",** according to claim 8, the characteristics of which are that in sealing closure position, there must be maximum pressure. The bearer begins to come into contact with the chain, slightly displaced from the stand-by position. In this position the pressure regulation pneumatic micro-valve changes the pressure derivation route causing the sealing cylinders to begin to expand to maximum pressure. Likewise, the accompanying cylinder is to be found near the position of origin and discharging. Finally, the accumulator is full of air at maximum pressure.

12. **"LINK DETERIORATION DETECTOR",** according to claim 8, the characteristics of which are that in sealing joint filling and start-detection position, the accompanying cylinder is to be found discharging and slightly displaced from the closure position. The sealing cylinders are expanded at maximum pressure. At this moment the bearer is in contact with the chain and the accumulator is beginning to release air into the bearer chamber as a result of the mechanically pulley-operated discharge micro-valve. The pressure gauge begins to regulate that there is no significant pressure loss in the accumulator.

13. **"LINK DETERIORATION DETECTOR",** according to claim 8, the characteristics of which are that at the end of detection and start-retraction position, the accompanying cylinder is to be found discharging, having covered its maximum path. In this position the time delay order for the retraction of sealing cylinders is sent to the central computer and the bearer starts to move away from the chain.

14. **"LINK DETERIORATION DETECTOR",** according to claim 8, the characteristics of which are that in start-return position, the sealing cylinders are finalising retraction and the accompanying cylinder is starting its return to the position of origin at maximum pressure, determined by a command sent by the central computer to the. accompanying cylinder retraction micro-valve. At this moment the bearer is separated from the chain and it is to be found at the end of its path. The accumulator is discharged and begins to fill up with air from the network.

15. **"LINK DETERIORATION DETECTOR",** according to previous claims, the characteristics of which are that the assembly chain carries out successive cycles which move in front of the detector each time in such a way that it is determined statistically whether a link is deteriorated or whether there has been a detector error.

16. **"LINK DETERIORATION DETECTOR",** according to claim 7, the characteristics of which are that it may come with a mechanism to label the defective link, when detected, by means of paint or the sticking of an adhesive, in order to ease the localisation of the deteriorated link.
